(19)

Europäisches Patentamt
European Patent Office
Office européen des brevets

(11) **EP 4 033 409 A1**

(12) **EUROPEAN PATENT APPLICATION**

(43) Date of publication:
**27.07.2022 Bulletin 2022/30**

(21) Application number: **21152442.6**

(22) Date of filing: **20.01.2021**

(51) International Patent Classification (IPC):
**G06M 1/10** (2006.01)    **G06M 11/00** (2006.01)
**A01M 1/02** (2006.01)

(52) Cooperative Patent Classification (CPC):
**A01M 1/026; A01M 1/02; G06M 1/101; G06M 11/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Smart Farm Sensing B.V.**
**201 BB Noordwijk (NL)**

(72) Inventors:
• **BIERENS, Laurens Herman Jozef**
**2635 GK Den Hoorn (NL)**
• **VAN DER GAAG, Johannes Thomas**
**3451 PZ Vleuten (NL)**

(74) Representative: **Nederlandsch Octrooibureau**
**P.O. Box 29720**
**2502 LS The Hague (NL)**

(54) **INSECT TRAP DETECTION METHOD, SENSOR DEVICE AND SYSTEM**

(57)    Method for detecting insects using an insect trap and detection device (10) and a post-processing platform (5), by determining a total probability $P_{tatal}$ of a detection event signalled by the insect trap and detection device (10). Pre-processing the sensor signal (2a) is obtained by applying a detection algorithm and a subsequent buffering algorithm to obtain a detector signal (3a) using parameters $N_{det}$, $N_{cool}$, $N_{pre}$, $N_{post}$, $W_{buff}$ and $B_{buff}$. Optionally also a blocking algorithm is applied, and a post-processing algorithm can be applied to a plurality of detection signatures obtained from the detection records (3a) in the received detector signal (3a, 3b). The insect trap and detection device (10) has a sensor channel (12) and a beam interrupt sensor (2) positioned in the sensor channel (12), and a local processing unit (3) connected to the beam interrupt sensor (2) and to a transmitter unit (4).

**Fig. 1**

EP 4 033 409 A1

# Description

## Field of the invention

The present invention relates to a method for detecting insects using an insect trap and detection device and a post-processing platform, the method comprising determining a total probability $P_{total}$ of a detection event signalled by the insect trap and detection device. In further aspect, the present invention relates to an insect trap and detection device, and a system for executing the present invention insect trap detection method embodiments.

## Background art

Known systems for insect trap detection exist, e.g. in the form of smart traps based on camera sensors. Such systems are not suitable to detect specific species of insects, such as red palm weevil (RPW), and are expensive due to the camera inside with associated image processing circuitry. A good alternative might be the use of an inexpensive infrared break beam sensor. Such detectors have been presented as part of several research initiatives for automatic RPW detection, however, these initiatives did not result in commercial success because using just a break beam sensor for detection is not reliable enough.

US patent publication US2017/055511 discloses systems, apparatuses and method of classifying flying insects. Use is made of specific characteristics of the flying insects sucha s wingbeat frequency and amplitude spectrum, requiring suitable sensors and high processing capabilities.

## Summary of the invention

The present invention seeks to provide an improved method, components and a system fro reliable insect detection, specifically able to detect the presence of red palm weevil in a reliable and cost-effective manner.

According to the present invention, a method as defined above is provided wherein the insect trap and detection device comprises a beam interrupt sensor operating with a (configurable) pulse frequency $F$, and providing a sensor signal comprising subsequent tick periods $T$ equal to $1/F$, each tick period $T$ indicating a beam interrupt level (e.g. '1') or a beam non-interrupt level (e.g. '0') of the beam interrupt sensor. The method comprises pre-processing the sensor signal by applying a detection algorithm and a subsequent buffering algorithm to obtain a detector signal. The detection algorithm comprises signalling a detection if more than $N_{det}$ concatenated tick periods $T$ indicating a beam interrupt level are present in the sensor signal, and upon a detection neglecting the subsequent $N_{cool}$ tick periods $T$ in the sensor signal, $N_{det}$ and $N_{cool}$ being predetermined integer values, storing a detection signature, the detection signature comprising the sensor signal with a window having $N_{pre}$ tick periods $T$ preceding the first of the $N_{det}$ tick periods $T$ indicating a beam interrupt level and $N_{post}$ tick periods $T$ trailing first of the $N_{det}$ tick periods $T$ indicating a beam interrupt level, $N_{pre}$ and $N_{post}$ being predetermined integer values, and composing the detector signal concatenating detection records, each detection record comprising an identifier, the detection signature, and a detection status having a value 'positive'. The buffering algorithm comprises counting the number of detections in a bufferwindow $W_{buff}$, and if the number of detections exceeds a buffer threshold $B_{buff}$, updating the detection status in the associated detection record to the value 'false-positive'. The method further comprises receiving the detector signal from the insect trap and detection device, and determining the total probability $P_{total}$ of a detection event associated with a detection record based on the value of the detection status.

This method, and the further embodiments as described herein, allow for a more reliable detection method, using parameters allowing to fine-tune the detection method for specific insects. Furthermore, by using a beam interrupt sensor which can operate at a relatively low operating frequency (e.g. 100-1000 Hz), also the further processing electronics can operate at a low frequency allowing operation with low energy consumption.

## Short description of drawings

The present invention will be discussed in more detail below, with reference to the attached drawings, in which

Fig. 1 shows a block diagram of a system according to an embodiment of the present invention;
Fig. 2 shows a cross sectional view of an insect trap and detection device according to an embodiment of the present invention;
Fig. 3 shows a timing diagram related to the detection and buffering algorithm applied in a method embodiment of the present invention;
Fig. 4 shows a flow diagram of a detection algorithm as applied in an exemplary embodiment of the present invention;
Fig. 5 shows a flow diagram of a blocking algorithm as applied in an exemplary embodiment of the present invention;
Fig. 6 shows a conceptual diagram of pre-processing a sensor signal as applied in an exemplary embodiment of the present invention;
Fig. 7 shows a conceptual diagram of post-processing a detection signal as applied in an exemplary embodiment of the present invention.

## Description of embodiments

Pest and diseases account for up to 40% of global crop yield losses across the world (FAO, 2019). Effective pest control is thus crucial in sustaining our future food chain and reducing crop production losses. But the current effectiveness of pest control has come to its limits because the traditional pest monitoring tools are often still based on labor intensive field scouting, paper-based inspection/registration reports and human interpretations. A fully operational Internet-of-Things (IoT) sensor information supply chain based modern IT systems (geo-information systems, spatial databases, web portals and mobile apps) is the key to increase the pest control effectiveness needed to sustain our (future) food chain and to reduce global crop production losses by pests.

For effective pest control it is important to detect the presence of pest in an early stage. A well-known traditional method of insect pest detection and monitoring is with insect traps. Using pheromone or food attractants, specific insects are captured with simple traps. Pest data registration, including mapping, is done by extension workers or scouts through manual and visual inspection of traps and counting the trapped insects. This manual process is tedious, time-consuming and error prone.

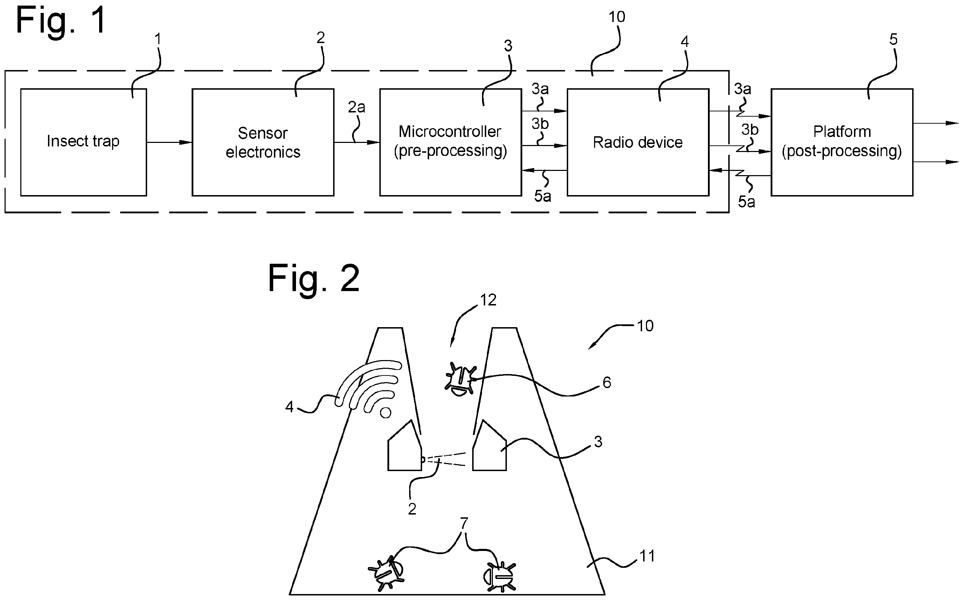

According to an aspect of the present invention, embodiments of smart detection devices as extension of the traditional insect traps are provided, in the form of an insect trap and detection device 10 and in a further aspect in the form of a system. Fig. 1 shows a block diagram of a system according to an embodiment of the present invention, with such an insect trap and detection device 10, and Fig. 2 shows a cross sectional view of an exemplary embodiment of such an insect trap and detection device 10.

The insect trap and detection device 10 comprises an insect trap 11 with a sensor channel 12 and a beam interrupt sensor 2 positioned in the sensor channel 12. As shown in Fig. 2 an inverted funnel 12 can be provided as an example of a sensor channel cooperating with the beam interrupt sensor 2 to detect passing insects. A local processing unit 3 is provided which is connected to the beam interrupt sensor 2 and to a transmitter unit 4, the local processing unit 3 being arranged to provide a detector signal 3a; 3b to the transmitter unit 4. The beam interrupt sensor 2 operates with a configurable pulse frequency $F$, and provides a sensor signal 2a comprising subsequent tick periods $T$ equal to $1/F$, each tick period $T$ indicating a beam interrupt level (e.g. '1') or a beam non-interrupt level (e.g. '0') of the beam interrupt sensor 2. The local processing unit 3 is further arranged to execute the method according to any one of the method embodiments described below.

As shown in Fig. 1, the system comprises one or more such insect trap and detection devices 10 and a back-end processing platform 5, the back-end processing platform 5 being arranged to execute further method embodiments of the present invention, as will be discussed further below. Each insect trap and detection device 10 comprises a physical insect trap 1, a beam interrupt sensor 2 with associated electronics that automatically detect a trapped insect, a local processing unit 3 in the form of e.g. a microcontroller running a pre-processing algorithm to filter out false positive detections, and a transmitter 4 or radio module to transfer the detection, to a (e.g. cloud-based) back-end processing platform 5. At the back-end processing platform 5 the detection result is analyzed by a post-processing algorithm using e.g. historic / regional detection data and auxiliary information (such as weather, environmental, climatic, maintenance, etc.), resulting in a detection probability. The post-processing results may e.g. be used to update the pre-processing algorithm in the insect trap and detection device 10 over the air.

In the cross sectional view of Fig. 2, an embodiment is shown of the device 10, wherein the beam interrupt sensor 2 comprises at least one light beam path which during operation is provided in the sensor channel (or inverted funnel) 12.

The beam interrupt sensor 2 as used in the present invention embodiments is e.g. an inexpensive pulsed infrared break beam sensor. Each insect type or an object that falls in the funnel 12 and passes the sensor 2 results in a unique sequence of beam interrupts. This knowledge is used in the method embodiments described below (possibly enhanced with machine learning) to distinguish detection of red palm weevil, RPW, (positive detections) and other objects (false positives detection). In this way a smart detector was created using simple and inexpensive pulsed infrared break beam sensor 2.

As described above, the beam interrupt sensor 2 can measure interrupts at a configurable pulse frequency $F$, typically in the order of a few 100 Hz, up to a few 1000 Hz. Due to this low frequency, the associated electronics can operate at a very low power which enables long battery operation. One observation period $T = 1/F$ is referred to as a "tick". During a tick the sensor 2 measures if the beam is interrupted or not. If an interrupt is detected than this means that the beam is blocked (by an insect or an object) during the corresponding tick $T$. To increase the detection accuracy, multiple beam interrupt sensors 2 may be combined, e.g. two. In an alternative or additional embodiment, the beam interrupt sensor 2 has two light beam paths, increasing the detection probability of an insect getting trapped. An interrupt event may then be read as an interrupt of one or more beams.

A further aspect of the present invention relates to a method for detecting insects using an insect trap and detection device 10 and a post-processing platform 5, the method comprising determining a total probability $P_{total}$ of a detection event signalled by the insect trap and detection device 10. As described above, the insect trap and detection device 10 comprises a beam interrupt sensor 2 operating with a (configurable) pulse frequency $F$, and providing a sensor signal 2a comprising subsequent tick periods $T$ equal to $1/F$, each tick period $T$ indicating a beam interrupt level (e.g. '1') or a beam non-interrupt level (e.g. '0') of the beam interrupt sensor 2. The method comprises pre-processing the sensor signal 2a by applying a detection algorithm and a subsequent buffering algorithm to obtain a detector signal 3a (see Fig. 1). The detection algorithm comprises signalling a detection if more than $N_{det}$ concatenated tick periods $T$ indicating a beam interrupt level are present in the sensor signal 2a, and upon a detection neglecting the subsequent $N_{cool}$ tick periods $T$ in the sensor signal, $N_{det}$ and $N_{cool}$ being predetermined integer values, storing a detection signature, the detection signature comprising the sensor signal with a window having $N_{pre}$ tick periods $T$ preceding the first of the $N_{det}$ tick periods $T$ indicating a beam interrupt level and $N_{post}$ tick periods $T$ trailing first of the $N_{det}$ tick periods $T$ indicating a beam interrupt level, $N_{pre}$ and $N_{post}$ being predetermined integer values, and composing the detector signal 3a concatenating detection records, each detection record comprising an identifier, the detection signature, and a detection status having a value 'positive'. The buffering algorithm comprises counting the number of detections in a buffer window $W_{buff}$, and if the number of detections exceeds a buffer threshold $B_{buff}$, updating the detection status in the associated detection record to the value 'false-positive', receiving the detector signal 3a from the insect trap and detection device, determining the total probability $P_{total}$ of a detection event associated with a detection record based on the value of the detection status. The combination of a detection algorithm and a buffering algorithm as described results in a more reliable detection of insects. The detection and buffering algorithm can be fine-tuned using the parameters $N_{det}$, $N_{cool}$, $N_{pre}$, $N_{post}$, $W_{buff}$ and $B_{buff}$.

In a further embodiment, the method further comprises updating the detection and buffering algorithm parameters $N_{det}$, $N_{cool}$, $N_{pre}$, $N_{past}$, $W_{buff}$ and $B_{buff}$. This can e.g. be implemented via an update message 5a received from the back-end processing platform 5 via transmitter 4 (see Fig. 1).

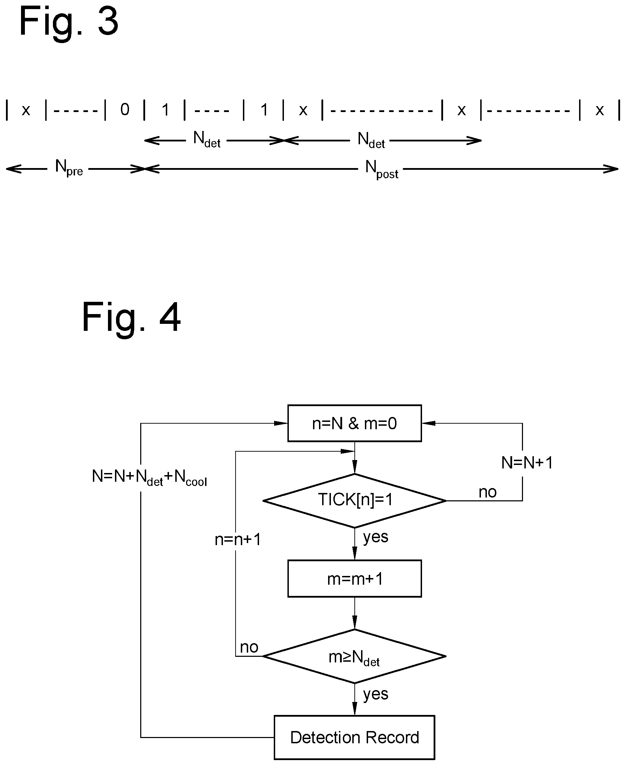

In Fig. 3 a timing diagram is shown related to the detection and buffering algorithm applied in the method embodiments of the present invention. The detection algorithm evaluates the stream of ticks $T$ originating from the beam interrupt sensor 2 (e.g. "1" if interrupted, else "0"). Upon $N_{det}$ concatenated 1's ("detection" ticks $T$) a detection is signaled. The following $N_{cool}$ "cooldown" ticks are neglected, i.e. not evaluated. Upon a detection, a detection signature is stored, which is the window of ticks $T$ around the detected tick determined by $N_{pre}$ "preamble" ticks and $N_{post}$ "postamble" ticks. The detection event is logged in a detection record, which includes an identifier, the detection signature, and the detection status (positive or false-positive). Optionally also a time stamp and/or a (geo)location are included in the detection record:

Detection Record {Identifier, Status = positive, Signature=TICK[N-Npre:N+Npost], Timestamp (optional), Geolocation (optional)}

The detection algorithm is illustrated in the flow diagram of Fig. 4, wherein n indicates a tick $T$ index, and

$m$ indicates the counter value.

The buffering algorithm evaluates concatenated detections within a buffer window. The buffer window $W_{buff}$ is indicated in seconds and as the buffer window typically includes multiple detections it relates to the detection as $Wbuff \gg (Npre + Npost) \times T$. The buffering algorithm counts the number of detections within the buffer window, and if that number exceeds a buffer threshold $Bbuff$ (i.e. it is not likely that within a certain time period more than $Bbuff$ detections occur) these detections are considered as false-positive, and the status of all detections within the buffer window is updated in their corresponding detection records and set to false-positive.

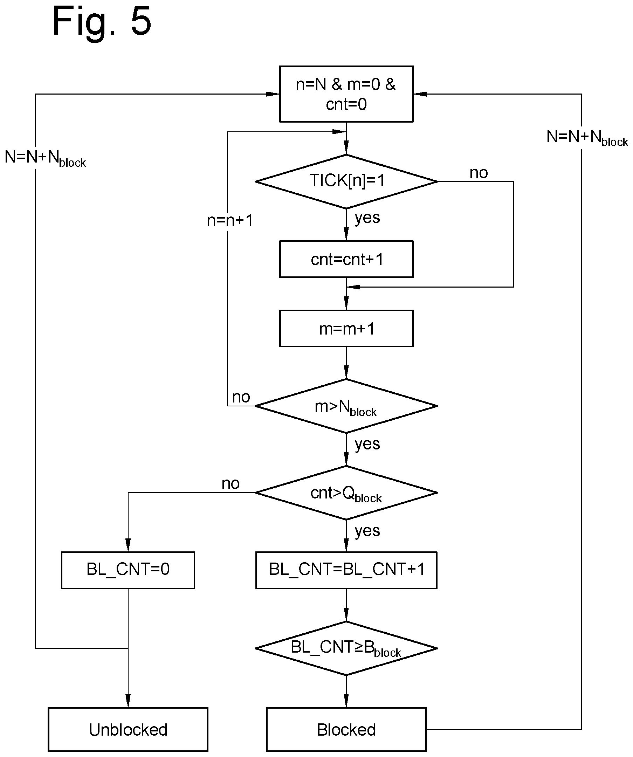

In a further embodiment, the method further comprising applying a blocking algorithm on the sensor signal 2a, the blocking algorithm operating on the sensor signal 2a independent from the detection algorithm and buffering algorithm. The blocking algorithm (an exemplary embodiment thereof being illustrated in the flow diagram of Fig. 5) comprises counting the number (cnt) of tick periods $T$ indicating a beam interrupt during a blocking window $W_{block}$, and if the percentage is higher than a predetermined value $Q_{block}$, increasing a blocked window counter $BL\text{-}CNT$, and if the blocked window counter is higher than a blocking threshold $B_{block}$, setting a blocking state parameter 3b to a blocked value. If the percentage is lower than a predetermined value $Q_{block}$, a blocking state parameter 3b is set to a non-blocked value.

The blocking algorithm continuously evaluates the stream of ticks $T$ independent of the detection algorithm. A blocking window $Wblock$, typically one second, is evaluated. The blocking state 3b is sent to the post-processing platform 5.

In a further embodiment, the local processing unit 3 is further arranged to update the blocking algorithm parameters $W_{block}$, $Q_{block}$, $B_{block}$, e.g. via the update message 5a received by transmitter unit 4.

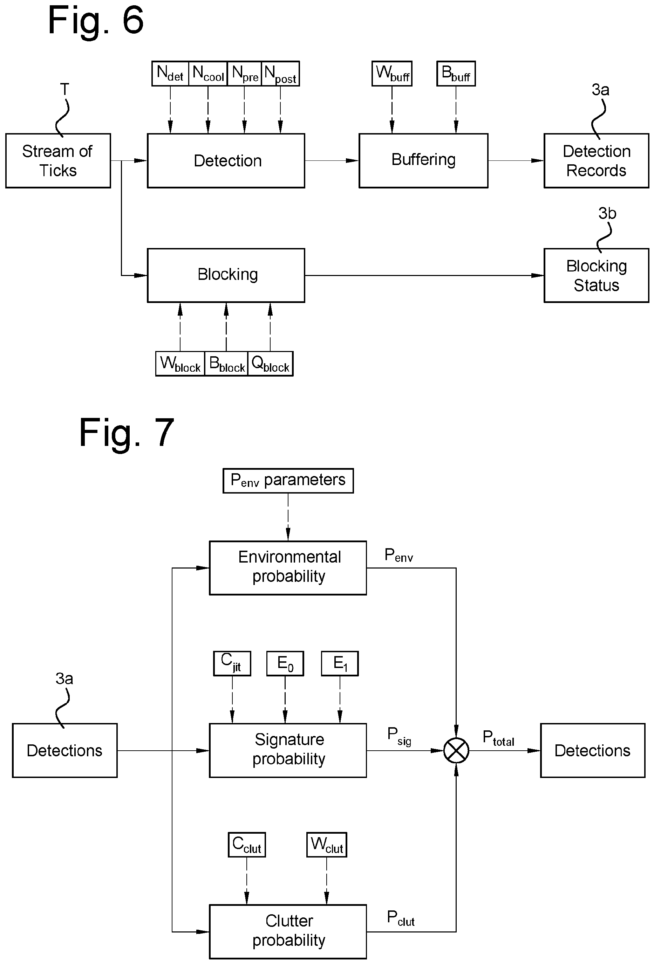

Summarizing, the three pre-processing sub-algorithms can be configured over the air by the following user configurable parameters, as shown in the conceptual diagram of Fig 6:

1. Detection algorithm: Detection ticks $Ndet$ (integer); Cooldown ticks $Ncool$ (integer); Preamble ticks $Npre$ (integer); Postamble ticks $Npost$ (integer)
2. Buffering algorithm: Buffer window $Wbuff$ (seconds); Buffer threshold $Bbuff$ (integer)
3. Blocking algorithm: Blocking window $Wblock$ (seconds) Blocking threshold $Bblock$ (integer); Blocking percentage $Qblock$ (%).

In further embodiments of the present invention, the method further comprises applying a post-processing algorithm to a plurality of detection signatures obtained from the detection records 3a in the received detector signal 3a, 3b, the post-processing algorithm comprising determining an environmental probability $P_{env}$ which is independent from the plurality of detection signatures, and a signature probability $P_{sig}$ and a clutter probability $P_{clut}$ which are dependent on the plurality of detection signatures, and calculating the total probability of detection $P_{total}$ according to

$$P_{total} = P_{env} \; x \; P_{sig} \; x \; P_{clut}.$$

The post-processing algorithm determines the total probability of a detection $P_{total}$ as compound of three probabilities derived from environment of the detection, the detection signature, and the detection clutter. This allows to further improve reliability of the insect detection.

The environmental probability $P_{env}$ is a deterministic function of, for example, location, date, time, weather. In other words, the environmental probability $P_{env}$ is determined as a probability value depending on environmental parameters, such as location, date, time, weather. For example, if it is known that insects are active at night, then

$$P_{env} = \begin{cases} 0.8 \; from \; 8{:}00PM \; to \; 6{:}00AM \\ 0.2 \; from \; 6{:}00AM \; to \; 8{:}00PM \end{cases}$$

The signature probability $P_{sig}$ is determined for a received detection signature as the product of a tick score $S_1$ and a jitter score $S_{jit}$, wherein the tick score $S_1$ is determined according to

$$S_1 = 1 - \frac{N_1 - N_{det}}{N_{sig} - N_{det}}$$

$N_{sig}$ being the sum of $N_{pre}$ and $N_{post}$, and $N_1$ being the number of beam interrupt indications, and the jitter score $S_{jit}$ is determined according to

$$S_{jit} = \begin{cases} 0 \; if \; N_{edge} = 1 \\ C_{jit}{}^{2-N_{edge}} \; if \; N_{edge} > 1 \end{cases}$$

$N_{edge}$ being the number of transitions in the received detection signature, and $C_{jit}$ being a predetermined jitter parameter.

For the evaluation of the detection signature the following numbers are used:

$N_{sig} = N_{pre} + N_{post}$ ; the number of ticks in the detection signature;
$N_{det}$ ; the number of concatenated ticks = "1" required for detection;
$N_1$ ; the number of ticks = "1";
$N_{edge}$ ; the number of "0>1" or "1>0" transitions

These parameters are thus used to calculate $S_1$, which is the score of "1" ticks except for the detection ticks as:

$$S_1 = 1 - \frac{N_1 - N_{det}}{N_{sig} - N_{det}}$$

If $S_1$ is close to one, then it means that the detection is "clean". If the $S_1$ is close to zero, then this means the detection is not clean. This can happen, for example if something is stuck or traverses slow through the funnel 12.

Also the jitter score $S_{jit}$ is calculated indicating the amount "0>1" or "1>0" transitions within the detection signature. Much jitter is an indication that the probability of the detection is low. An ideal detection has two transitions, i.e. $S_{jit}$ = 1, and a non-ideal detection has many transitions in its detection signature. E.g., this may be a moth flying in and out the funnel 12.

The predetermined jitter parameter $C_{jit}$ (> 1, e.g. between 1 and 2) is a base parameter heuristically determined to tune the impact the number of transitions on the detection. In the case of RPW detection $C_{jit}$ = 1.4 appears to be a good choice. The function $S_{jit}$ is an exponential function, because some small amount of jitter is still expected when e.g. an RPW falls through the funnel 12. However, a lot of jitter is a very good indication that this is not an RPW and should be damped heavily. Note that $N_{edge}$ = 1 is a condition that can occur if the signature looks a concatenation of '1' in all ticks T in the period covered by $N_{cool}$. Although rarely the case, it may happen and this is a very non-ideal situation, so the score $S_{jit}$ is set to zero.

The signature probability is thus set to the multiplication of $S_1$ and $S_{jit}$. To keep the possibility to smoothen the boundaries (avoid exact probability 0.0 or 1.0) error margins $E_0$ and $E_1$ are introduced as minimum and maximum values in a further embodiment, wherein the signature probability $P_{sig}$ is determined according to

$$P_{sig} = \begin{cases} E_0 \; if \; S_1 S_{jit} < E_0 \\ 1 - E1 \; if \; S_1 S_{jit} > 1 - E_1 \\ S_1 S_{jit} \; otherwise \end{cases}$$

wherein $E_0$ is a predetermined minimum error margin and $E_1$ is a predetermined maximum error margin.

The clutter probability $P_{clut}$ evaluates how many detections occurred around the detection. It is not likely that RPW fall into a trap 10 one after another in a short time frame. So many detections close after each other ("clutter") should result in a low probability of the detection. In a further embodiment, the clutter probability $P_{clut}$ is determined by the function

$$P_{clut} = C_{clut}{}^{1-N_{clut}}$$

wherein $N_{clut}$ is the number of detections in a time window $W_{clut}$ surrounding the current detection signature, and $C_{clut}$ is a predetermined clutter parameter larger than 1.

The predetermined clutter parameter $C_{clut}$ is a base parameter heuristically determined to tune the impact the number of clutter detections on the detection. In the case of RPW detection $Cclut$ between 1 and 2, e.g. equal to 1.5 appears to be a good choice. The function $P_{clut}$ is an exponential function because some small amount of clutter may be allowed. However, a lot of clutter is a very good indication that this is not an RPW and should be damped heavily.

Summarizing, the three post-processing sub-algorithms can be configured by the following user configurable parameters, as shown in the conceptual diagram of Fig 7:

1. Environmental probability: Environmental probability $P_{env}$ (parameters, e.g. in the form of a function);
2. Signature probability: Jitter base parameter $C_{jit}$; Minimum error margin $E_0$; Maximum error margin $E_1$;
3. Clutter probability: Clutter base parameter $C_{clut}$; Clutter window $W_{clut}$ (seconds).

These parameters may be tuned to specific detection circumstances, e.g. using a machine learning system.

The present invention has been described above with reference to a number of exemplary embodiments as shown in the drawings. Modifications and alternative implementations of some parts or elements are possible, and are included in the scope of protection as defined in the appended claims.

**Claims**

1. Method for detecting insects using an insect trap and detection device (10) and a post-processing platform (5), the method comprising determining a total probability $P_{total}$ of a detection event signalled by the insect trap and detection device (10),
   wherein the insect trap and detection device (10) comprises a beam interrupt sensor (2) operating with a pulse frequency $F$, and providing a sensor signal (2a) comprising subsequent tick periods $T$ equal to $1/F$, each tick period $T$ indicating a beam interrupt level or a beam non-interrupt level of the beam interrupt sensor (2),
   the method comprising
   pre-processing the sensor signal (2a) by applying a detection algorithm and a subsequent buffering algorithm to obtain a detector signal (3a),
   the detection algorithm comprising
   signalling a detection if more than $N_{det}$ concatenated tick periods $T$ indicating a beam interrupt level are present in the sensor signal (2a), and upon a detection:

   neglecting the subsequent $N_{cool}$ tick periods $T$ in the sensor signal, $N_{det}$ and $N_{cool}$ being predetermined integer values,
   storing a detection signature, the detection signature comprising the sensor signal with a window having $N_{pre}$ tick periods $T$ preceding the first of the $N_{det}$ tick periods $T$ indicating a beam interrupt level and $N_{post}$ tick periods $T$ trailing first of the $N_{det}$ tick periods $T$ indicating a beam interrupt level, $N_{pre}$ and $N_{post}$ being predetermined integer values,
   composing the detector signal (3a) concatenating detection records, each detection record comprising an identifier, the detection signature, and a detection status having a value 'positive' [and optionally time-stamp and/or geo-location], the buffering algorithm comprising
   counting the number of detections in a buffer window $W_{buff}$, and if the number of detections exceeds a buffer threshold $B_{buff}$, updating the detection status in the associated detection record to the value 'false-positive',

   receiving the detector signal (3a) from the insect trap and detection device,
   determining the total probability $P_{total}$ of a detection event associated with a detection record based on the value of the detection status.

2. Method according to claim 1, further comprising updating the detection and buffering algorithm parameters $N_{det}$, $N_{cool}$, $N_{pre}$, $N_{post}$, $W_{buff}$ and $B_{buff}$.

3. Method according to claim 1 or 2, further comprising applying a blocking algorithm on the sensor signal (2a), the blocking algorithm operating on the sensor signal (2a) independent from the detection algorithm and buffering algorithm,
   the blocking algorithm comprising counting the number of tick periods $T$ indicating a beam interrupt during a blocking window $W_{block}$, and
   if the percentage is higher than a predetermined value $Q_{block}$, increasing a blocked window counter, and if the blocked window counter is higher than a blocking threshold $B_{block}$, setting a blocking state parameter (3b) to a blocked value, and
   if the percentage is lower than a predetermined value $Q_{block}$, setting a blocking state parameter (3b) to a non-blocked value.

4. Method according to claim 3, wherein the blocking window $W_{block}$ has a duration of one second.

5. Method according to any one of claims 1-4, further comprising
   applying a post-processing algorithm to a plurality of detection signatures obtained from the detection records (3a) in the received detector signal (3a, 3b), the post-processing algorithm comprising
   determining an environmental probability $P_{env}$ which

is independent from the plurality of detection signatures, and a signature probability $P_{sig}$ and a clutter probability $P_{clut}$ which are dependent on the plurality of detection signatures, and calculating the total probability of detection $P_{total}$ according to

$$P_{total} = P_{env} \times P_{sig} \times P_{clut}.$$

6. Method according to claim 5, wherein the environmental probability $P_{env}$ is determined as a probability value depending on environmental parameters, such as location, date, time, weather.

7. Method according to claim 5 or 6, wherein the signature probability $P_{sig}$ is determined for a received detection signature as the product of a tick score $S_1$ and a jitter score $S_{jit}$, wherein the tick score $S_1$ is determined according to

$$S_1 = 1 - \frac{N_1 - N_{det}}{N_{sig} - N_{det}}$$

$N_{sig}$ being the sum of $N_{pre}$ and $N_{post}$, and $N_1$ being the number of beam interrupt indications, and the jitter score $S_{jit}$ is determined according to

$$S_{jit} = \begin{cases} 0 \; if \; N_{edge} = 1 \\ C_{jit}{}^{2-N_{edge}} \; if \; N_{edge} > 1 \end{cases}$$

$N_{edge}$ being the number of transitions in the received detection signature, and $C_{jit}$ being a predetermined jitter parameter.

8. Method according to claim 7, wherein the predetermined jitter parameter $C_{jit}$ has a value of between 1 and 2, e.g. equal to 1.4

9. Method according to any one of claims 5-8, wherein the signature probability $P_{sig}$ is determined according to

$$P_{sig} = \begin{pmatrix} E_0 \; if \; S_1 S_{jit} < E_0 \\ 1 - E1 \; if \; S_1 S_{jit} > 1 - E_1 \\ S_1 S_{jit} \; otherwise \end{pmatrix}$$

wherein $E_0$ is a predetermined minimum error margin and $E_1$ is a predetermined maximum error margin.

10. Method according to any one of claims 5-9, wherein the clutter probability $P_{clut}$ is determined by the function

$$P_{clut} = C_{clut}{}^{1-N_{clut}}$$

wherein $N_{clut}$ is the number of detections in a time window $W_{clut}$ surrounding the current detection signature, and $C_{clut}$ is a predetermined clutter parameter.

11. Method according to claim 10, wherein the predetermined clutter parameter $C_{clut}$ has a value of between 1 and 2, e.g. equal to 1.5.

12. Insect trap and detection device, the insect trap and detection device (10) comprising a sensor channel (12) and a beam interrupt sensor (2) positioned in the sensor channel (12), and a local processing unit (3) being connected to the beam interrupt sensor (2) and to a transmitter unit (4),
the local processing unit (3) being arranged to provide a detector signal (3a; 3b) to the transmitter unit (4),
the beam interrupt sensor (2) operating with a pulse frequency $F$, and providing a sensor signal (2a) comprising subsequent tick periods $T$ equal to $1/F$, each tick period $T$ indicating a beam interrupt level or a beam non-interrupt level of the beam interrupt sensor (2),
the local processing unit (3) being further arranged to execute the method according to any one of claim 1-4.

13. Device according to claim 12, wherein the local processing unit (3) is further arranged to update the blocking algorithm parameters $W_{block}$, $Q_{block}$, $B_{block}$.

14. Device according to claim 12 or 13, wherein the beam interrupt sensor (2) comprises at least one light beam path which during operation is provided in the sensor channel (12).

15. System comprising one or more devices (10) according to any one of claims 12-14 and a back-end processing platform (5), the back-end processing platform being arranged to execute the method according to any one of claims 5-11.

Fig. 1

Fig. 2

# Fig. 3

| x |-----| 0 | 1 |---- | 1 | x |------------| x |----------| x |

$$\longleftarrow N_{det} \longrightarrow\!\!\longleftarrow\qquad N_{det} \qquad\longrightarrow$$

$$\longleftarrow N_{pre} \longrightarrow\!\!\longleftarrow\qquad\qquad\qquad N_{post} \qquad\qquad\qquad\longrightarrow$$

# Fig. 4

$N = N+N_{det}+N_{cool}$

n=N & m=0  →  N=N+1

TICK[n]=1 — no

yes

m=m+1

n=n+1

$m \geq N_{det}$ — no

yes

Detection Record

# Fig. 5

```
                                    ┌──────────────────┐
                                    │  n=N & m=0 &     │
                                    │     cnt=0        │
                                    └──────────────────┘
                                            │
                                            ▼
                                    ╱───────────────╲        no
                        n=n+1      ╲   TICK[n]=1    ╱──────────┐
                                    ╲─────────────╱           │
                                            │ yes             │
                                            ▼                 │
                                    ┌──────────────────┐      │
                                    │   cnt=cnt+1      │      │
                                    └──────────────────┘      │
                                            │◄────────────────┘
                                            ▼
                                    ┌──────────────────┐
                                    │    m=m+1         │
                                    └──────────────────┘
                                            │
                        no                  ▼
                    ┌──────────── ╱─────────────────╲
                    │            ╲    m>N_block      ╱
                    │             ╲────────────────╱
                    │                     │ yes
                    │                     ▼
          no        │             ╱─────────────────╲
      ┌─────────────┼──────────── ╲   cnt>Q_block    ╱
      │             │              ╲────────────────╱
      ▼             │                     │ yes
┌───────────┐       │              ┌──────────────────┐
│ BL_CNT=0  │       │              │ BL_CNT=BL_CNT+1  │
└───────────┘       │              └──────────────────┘
      │             │                     │
      │             │                     ▼
      │             │              ╱─────────────────╲
      │             │              ╲ BL_CNT≥B_block   ╱
      │             │               ╲───────────────╱
      ▼             │                     │
┌───────────┐       │              ┌──────────────────┐
│ Unblocked │       │              │    Blocked       │
└───────────┘       │              └──────────────────┘
```

$N=N+N_{block}$

$N=N+N_{block}$

# Fig. 6

| | | | | | | |
|---|---|---|---|---|---|---|
| | $N_{det}$ | $N_{cool}$ | $N_{pre}$ | $N_{post}$ | $W_{buff}$ | $B_{buff}$ |

T

Stream of Ticks → Detection → Buffering → Detection Records 3a

Blocking → Blocking Status 3b

$W_{block}$ $B_{block}$ $Q_{block}$

# Fig. 7

$P_{env}$ parameters

Environmental probability → $P_{env}$

$C_{jit}$ $E_0$ $E_1$

Detections 3a → Signature probability → $P_{sig}$ → $\otimes$ → $P_{total}$ → Detections

$C_{clut}$ $W_{clut}$

Clutter probability → $P_{clut}$

Europäisches Patentamt

European Patent Office

Office européen des brevets

# EUROPEAN SEARCH REPORT

Application Number

EP 21 15 2442

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 646 404 A (LITZKOW CARL A [US] ET AL) 8 July 1997 (1997-07-08) <br> * column 2, line 34 - line 54 * <br> * column 4, line 53 - column 6, line 48 * <br> * column 9, line 5 - line 14 * <br> * figure 1 * <br> ----- | 1-15 | INV. <br> G06M1/10 <br> G06M11/00 <br> A01M1/02 |
| A | US 2019/187281 A1 (WEBER-GRABAU MICHAEL [US]) 20 June 2019 (2019-06-20) <br> * paragraphs [0002], [0003] * <br> * paragraph [0015] - paragraph [0017] * <br> * paragraph [0088] - paragraph [0115] * <br> ----- | 1-15 | |
| A | US 5 005 416 A (VICK KENNETH W [US] ET AL) 9 April 1991 (1991-04-09) <br> * the whole document * <br> ----- | 1,12,15 | |
| A | US 2006/072012 A1 (SHIMIZU HIDEO [JP] ET AL) 6 April 2006 (2006-04-06) <br> * the whole document * <br> ----- | 1 | |
| | | | TECHNICAL FIELDS SEARCHED (IPC) <br><br> G06M |

The present search report has been drawn up for all claims

| Place of search | Date of completion of the search | Examiner |
|---|---|---|
| Munich | 24 June 2021 | Geiger, Hans-Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 2442

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2021

| Patent document cited in search report | | Publication date | Patent family member(s) | | Publication date |
|---|---|---|---|---|---|
| US 5646404 | A | 08-07-1997 | NONE | | |
| US 2019187281 | A1 | 20-06-2019 | US 2019187281 A1 | | 20-06-2019 |
| | | | US 2020209390 A1 | | 02-07-2020 |
| US 5005416 | A | 09-04-1991 | NONE | | |
| US 2006072012 | A1 | 06-04-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017055511 A